# EUROPEAN PATENT SPECIFICATION

(11) **EP 4 212 911 B1**
(45) Date of publication and mention of the grant of the patent: **26.08.2026**
(21) Application number: 20954737.1
(22) Date of filing: 28.09.2020
(51) Int. Cl.: G01S 7/487, G01S 7/03, G01S 7/41, G01S 7/481, G01S 7/497, G01S 13/10, G01S 17/10, G01S 17/42

(54) **RADAR RANGING METHOD AND DEVICE**
RADARENTFERNUNGSMESSVERFAHREN UND -VORRICHTUNG
PROCÉDÉ ET DISPOSITIF DE TÉLÉMÉTRIE PAR RADAR

(43) Date of publication of application: 19.07.2023
(73) Proprietor: Yinwang Intelligent Technologies Co., Ltd., Shenzhen, Guangdong 518129 (CN)
(72) Inventor: HAN, Erjiang, Shenzhen, Guangdong 518129 (CN); SHI, Xianling, Shenzhen, Guangdong 518129 (CN)
(74) Representative: Pfenning, Meinig & Partner mbB
(86) International application number: PCT/CN2020/118402
(87) International publication number: WO 2022/061887

(56) References cited:
- WO-A1-2017/210418
- CN-A- 106 199 538
- CN-A- 106 443 658
- CN-A- 108 594 199
- CN-A- 110 244 311
- CN-A- 110 927 681
- US-A1- 2016 209 499
- US-A1- 2018 038 945

## Description

### TECHNICAL FIELD

This specification relates to the field of sensor technologies, and more specifically, to a radar ranging method, a radar ranging apparatus, a computer program product, and a computer-readable storage medium in the field of sensor technologies.

### BACKGROUND

With development of society and progress of science and technology, intelligent vehicles gradually enter people's daily life. A sensor plays a very important role in unmanned driving and intelligent driving of the intelligent vehicle. The sensor may include a millimeter-wave radar, a laser radar, an ultrasonic radar, a camera, and the like.

A ranging principle of a radar ranging apparatus is as follows: A transmitter of the radar ranging apparatus sends a radar signal, a receiver of the radar ranging apparatus receives an echo signal that corresponds to a target in a vision scope and that is generated when the radar signal is reflected by the target, and a distance between the target and the radar ranging apparatus is calculated by measuring delay time from time for sending the radar signal to time for receiving the echo signal of the target.

Document US 2018/038945 A1 discloses imaging devices and methods for determining a distance to a target object utilizing a single sensor array.

Document WO 2017/210418 A1 discloses methods and systems for performing three dimensional LIDAR measurements with multiple illumination beams scanned over a three dimensional environment.

However, during actual application, because a part of signals may be reflected back by an inner wall or a window of the radar ranging apparatus in a radar signal transmission process, a spurious echo signal is generated. In this way, echo signals received by the receiver may include both the echo signal of the target and the spurious echo signal. In other words, the spurious echo signal causes interference to the echo signal of the target. Consequently, accuracy of performing ranging on the target by using the echo signals received by the receiver is low.

### SUMMARY

Embodiments of this specification provide a radar ranging method, a radar ranging apparatus, a computer program product, and a computer-readable storage medium according to the independent claims, to improve accuracy of radar ranging.

According to a first aspect, an embodiment of the invention provides a radar ranging method, and the method may be applied to a radar ranging apparatus. The method includes: sending a first radar signal through a first transmitter, wherein the first radar signal is a laser radar signal; receiving a first echo signal of the first radar signal through a first receiver, wherein the first echo signal comprises an echo signal of a first target; receiving a second echo signal of the first radar signal through a second receiver, wherein the second receiver is located outside a primary signal transmission path between the first transmitter and the first receiver; and performing ranging processing on the first target based on the first echo signal and the second echo signal, wherein the second echo signal is used to determine a target spurious echo signal corresponding to an obstacle, and the echo signal of the first target does not comprise the target spurious echo signal. Further, the second echo signal comprises a first spurious echo signal corresponding to the obstacle, and the target spurious echo signal is obtained based on the first spurious echo signal and the first echo signal; the first spurious echo signal is generated when the first radar signal is reflected by the obstacle; a delay time of the first spurious echo signal is adjusted a plurality of times to obtain a plurality of first adjusted signals, a ratio of an amplitude of the first echo signal at a first sampling moment to an amplitude of each of the plurality of first adjusted signals at the first sampling moment is determined as an amplitude coefficient of each first adjusted signal, each first adjusted signal and the amplitude coefficient of each first adjusted signal are multiplied to obtain a plurality of second adjusted signals, and the target spurious echo signal is determined based on the plurality of second adjusted signals and the first echo signal, wherein minimum mean square error processing is performed on each of the plurality of second adjusted signals and the first echo signal, to obtain a plurality of processing results, where a smaller value of the processing result indicates that a second adjusted signal corresponding to the processing result is more similar to the target spurious echo signal; and a second adjusted signal corresponding to a smallest value in those of the plurality of processing results is determined as the target spurious echo signal, the target spurious echo signal is cancelled from the first echo signal to obtain the echo signal of the first target, and the ranging processing is performed based on the echo signal of the first target.

According to the radar ranging method provided in this embodiment of this specification, the radar ranging apparatus can cancel, based on a second spurious echo signal received in real time, the target spurious echo signal corresponding to the obstacle from the first echo signal, so that interference caused by the spurious echo signal to the echo signal of the first target can be reduced, in other words, purity of the echo signal of the first target can be improved, and therefore accuracy of radar ranging can be improved.

In other words, the primary signal transmission path between the first transmitter and the first receiver includes the first target, and therefore the first echo signal received by the first receiver includes the echo signal of the first target. In addition, the second receiver is located outside the primary signal transmission path, and therefore the second echo signal received by the second receiver does not include the echo signal of the first target.

The radar ranging apparatus includes a first signal transceiver group and a second signal transceiver group. The first signal transceiver group includes the first transmitter and the first receiver. The second signal transceiver group includes the second receiver and a second transmitter, and the radar ranging apparatus does not send a radar signal through the second transmitter. Alternatively, the second receiver may be a receiver additionally disposed outside the primary signal transmission path between the first transmitter and the first receiver. This is not limited in this embodiment of this specification.

For example, the first transmitter may be an LD, the first receiver may be an APD, and the second receiver may be a photodiode (positive intrinsic-negative, PIN).

Optionally, the obstacle may include an object inside the radar ranging apparatus and/or an object outside the radar ranging apparatus. This is not limited in this embodiment of this specification.

In a possible implementation, the obstacle may include at least one of an inner wall of a housing, a window, or an internal circuit of the radar ranging apparatus.

In another possible implementation, the obstacle may further include an object, outside the radar ranging apparatus, other than the first target.

Optionally, that the radar ranging apparatus performs ranging processing on the first target based on the first echo signal and the second echo signal may include: The radar ranging apparatus determines the target spurious echo signal corresponding to the obstacle based on the second echo signal, cancels the target spurious echo signal from the first echo signal to obtain the echo signal of the first target, and performs ranging processing on the first target based on the echo signal of the first target.

It should be noted that, because a scattering phenomenon may occur in a propagation process of the first radar signal, a part of scattered signals may be reflected to the second receiver by the obstacle, for example, the inner wall, the window, or the circuit inside the radar ranging apparatus. In other words, the second echo signal received by the second receiver may include a first spurious echo signal corresponding to the obstacle, and the first echo signal received by the first receiver may further include the second spurious echo signal corresponding to the obstacle.

However, because the first receiver and the second receiver are located at different locations, delay time and/or amplitudes of the first spurious echo signal and the second spurious echo signal may be different. Therefore, when the first spurious echo signal is directly used to cancel the second spurious echo signal from the first echo signal, incomplete cancellation (in other words, purity of the echo signal of the first target that is obtained after cancellation is low) or excessive cancellation (in other words, a part of the echo signal of the first target that is obtained after cancellation is missing) may exist, resulting in poor accuracy of radar ranging performed based on the echo signal of the first target.

The radar ranging apparatus determines, based on the first spurious echo signal, the target spurious echo signal corresponding to the obstacle, where the target spurious echo signal is considered to be the most similar to the target spurious echo signal in the first echo signal; and cancels the target spurious echo signal from the first echo signal to obtain the echo signal of the first target.

In a possible implementation, the radar ranging apparatus may correct the first spurious echo signal based on the first echo signal, to obtain the target spurious echo signal.

Optionally, the radar ranging apparatus may correct the first spurious echo signal based on the first echo signal in a plurality of manners, to obtain the target spurious echo signal. This is not limited in this embodiment of this specification.

The radar ranging apparatus adjusts delay time of the first spurious echo signal a plurality of times to obtain a plurality of first adjusted signals, determines a ratio of an amplitude of the first echo signal at a first sampling moment to an amplitude of each of the plurality of first adjusted signals at the first sampling moment as an amplitude coefficient of each first adjusted signal, multiplies each first adjusted signal and the amplitude coefficient of each first adjusted signal to obtain a plurality of second adjusted signals, and determines the target spurious echo signal based on the plurality of second adjusted signals and the first echo signal.

Optionally, when the second spurious echo signal in the first echo signal and a first target echo signal are not superimposed, the first sampling moment may be any sampling moment on the second spurious echo signal. Alternatively, when the second spurious echo signal in the first echo signal and a first target echo signal are superimposed, the first sampling moment may be a sampling moment corresponding to a peak of the second spurious echo signal or a sampling moment on a leading edge of the second spurious echo signal. Alternatively, when saturation exists on the second spurious echo signal, the first sampling moment may be a sampling moment on a leading edge of the second spurious echo signal except a saturation interval.

That the radar ranging apparatus determines the target spurious echo signal based on the plurality of second adjusted signals and the first echo signal includes: The radar ranging apparatus performs minimum mean square error processing on each of the plurality of second adjusted signals and the first echo signal, to obtain a plurality of processing results, where a smaller value of the processing result indicates that a second adjusted signal corresponding to the processing result is more similar to the target spurious echo signal; and determines a second adjusted signal corresponding to a smallest value in those of the plurality of processing results as the target spurious echo signal.

It should be noted that, if an amplitude of the target spurious echo signal at a sampling moment exceeds a saturation value of the target spurious echo signal, the radar ranging apparatus may use the saturation value of the target spurious echo signal as an amplitude at the sampling moment.

Because the echo signal of the first target and the second spurious echo signal that are included in the first echo signal may be superimposed, and even an amplitude obtained after superimposition may exceed a saturation value of the first echo signal in some cases, saturation distortion is caused. In this way, the echo signal of the first target may cause interference to correction, resulting in low purity and poor accuracy of the target spurious echo signal obtained after correction.

In another possible implementation, that the radar ranging apparatus determines the target spurious echo signal based on the plurality of second adjusted signals and the first echo signal may include: The radar ranging apparatus performs minimum mean square error processing on the plurality of second adjusted signals and the first echo signal in a first sampling interval, to obtain a plurality of processing results, where a smaller value of the processing result indicates that a second adjusted signal corresponding to the processing result is more similar to the target spurious echo signal; and determines an adjusted signal corresponding to a smallest value in those of the plurality of processing results as the target spurious echo signal.

Optionally, the preset first sampling interval may be a sampling interval on the leading edge of the second spurious echo signal. If saturation exists on the second spurious echo signal, the first sampling interval does not include a sampling moment in the saturation interval.

In still another possible implementation, the radar ranging apparatus may estimate, from the first echo signal by using a Gaussian decomposition algorithm, the second spurious echo signal corresponding to the obstacle, and correct the first spurious echo signal based on the second spurious echo signal, to obtain the target spurious echo signal.

According to the radar ranging method provided in this embodiment of this specification, the radar ranging apparatus estimates the second spurious echo signal from the first echo signal by using the Gaussian decomposition algorithm, and corrects the first spurious echo signal based on the second spurious echo signal. In this way, purity and accuracy of the target spurious echo signal can be improved, and therefore the accuracy of radar ranging can be improved.

The radar ranging apparatus adjusts the delay time of the first spurious echo signal a plurality of times to obtain the plurality of first adjusted signals, determines a ratio of an amplitude of the second spurious echo signal at the first sampling moment to the amplitude of each of the plurality of first adjusted signals at the first sampling moment as an amplitude coefficient of each first adjusted signal, multiplies each first adjusted signal and the amplitude coefficient of each first adjusted signal to obtain a plurality of second adjusted signals, and determine the target spurious echo signal based on the plurality of second adjusted signals and the second spurious echo signal.

That the radar ranging apparatus determines the target spurious echo signal based on the plurality of second adjusted signals and the second spurious echo signal includes: The radar ranging apparatus performs minimum mean square error processing on the plurality of second adjusted signals and the second spurious echo signal, to obtain a plurality of processing results, where a smaller value of the processing result indicates that a second adjusted signal corresponding to the processing result is more similar to the target spurious echo signal; and determines a second adjusted signal corresponding to a smallest value in those of the plurality of processing results as the target spurious echo signal.

It should be noted that, for a process in which the radar ranging apparatus corrects the first spurious echo signal based on the second spurious echo signal to obtain the target spurious echo signal, refer to the process in which the radar ranging apparatus corrects the first spurious echo signal based on the first echo signal. To avoid repetition, details are not described herein again.

It should be further noted that, for a process in which the radar ranging apparatus cancels the target spurious echo signal from the first echo signal to obtain the echo signal of the first target, refer to the process in which the radar ranging apparatus cancels the spurious echo signal from the first echo signal to obtain the echo signal of the first target in the first aspect. To avoid repetition, details are not described herein again.

According to a second aspect, an embodiment of the invention further provides a radar ranging apparatus, including a signal processing apparatus, at least one signal transceiver group, and a reflective apparatus adapted to execute the method according to any one of the first aspect or the possible implementations of the first aspect.

Optionally, the signal processing apparatus according to the second aspect may be a chip apparatus or an integrated circuit in a radar ranging apparatus.

According to a third aspect, an embodiment of the invention further provides a computer program product including instructions. When the computer program product runs on a computer connected to a first transmitter configured for sending a first radar signal, wherein the first radar signal is a laser radar signal, a first receiver configured for receiving a first echo signal of the first radar signal, and to a second receiver, configured for receiving a second echo signal of the first radar signal, the second receiver being located outside a primary signal transmission path between the first transmitter and the first receiver, the computer is enabled to implement the method according to the foregoing first aspect or the possible implementations of the foregoing first aspect.

According to a fourth aspect, an embodiment of the invention further provides a computer-readable storage medium having stored thereon the computer program product according to the third aspect.

The signal processing apparatus, the radar ranging apparatus, the computer storage medium, and the computer program product provided in embodiments of this specification are all configured to perform the radar ranging method provided above. Therefore, for beneficial effects that can be achieved by the signal processing apparatus, the radar ranging apparatus, the computer storage medium, the computer program product, and the terminal, refer to the beneficial effects in the radar ranging method provided above. Details are not described herein again.

### BRIEF DESCRIPTION OF DRAWINGS

FIG. 1 is a schematic block diagram of a radar ranging apparatus 100 according to an embodiment of this specification;
FIG. 2 is another schematic block diagram of a radar ranging apparatus 100 according to an embodiment of this specification;
FIG. 3 is still another schematic block diagram of a radar ranging apparatus 100 according to an embodiment of this specification;
FIG. 4 is a schematic flowchart of a radar ranging method 200 according to an example, which is not an embodiment of the present invention but helpful for understanding certain aspects thereof;
FIG. 5 is a schematic diagram of a signal parameter according to an example, which is not an embodiment of the present invention but helpful for understanding certain aspects thereof;
FIG. 6 is a schematic diagram of a signal waveform according to an example, which is not an embodiment of the present invention but helpful for understanding certain aspects thereof;
FIG. 7 is a schematic diagram of a spurious echo signal according to an example, which is not an embodiment of the present invention but helpful for understanding certain aspects thereof;
FIG. 8 is a schematic diagram of another spurious echo signal according to an example, which is not an embodiment of the present invention but helpful for understanding certain aspects thereof;
FIG. 9 is a schematic diagram of a signal processing process in the radar ranging method 200 according to an example, which is not an embodiment of the present invention but helpful for understanding certain aspects thereof;
FIG. 10 is a schematic flowchart of a radar ranging method 300 according to an embodiment of the invention;
FIG. 11 is yet another schematic block diagram of a radar ranging apparatus 100 according to an embodiment of the invention;
FIG. 12 is a schematic diagram of a waveform of a first echo signal according to an embodiment of the invention;
FIG. 13 is a schematic diagram of another waveform of a first echo signal according to an embodiment of the invention;
FIG. 14 is a schematic diagram of still another waveform of a first echo signal according to an embodiment of invention;
FIG 15 is a schematic diagram of a signal processing process in a radar ranging method 300 according to an embodiment of the invention;
FIG. 16 is a schematic diagram of a waveform of a target spurious echo signal according to an embodiment of this specification; and
FIG. 17 is a schematic block diagram of a radar ranging apparatus 400 according to an embodiment of this specification.

### DESCRIPTION OF EMBODIMENTS

The following describes technical solutions of this specification with reference to accompanying drawings.

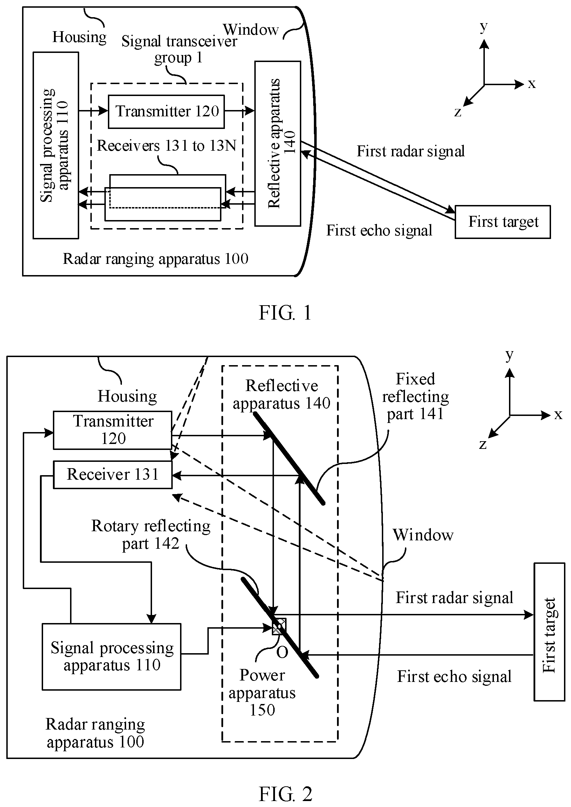

FIG. 1 is a schematic block diagram (a top view) of a radar ranging apparatus 100 to which a radar ranging method provided in embodiments of this specification is applied. As shown in FIG. 1, the radar ranging apparatus 100 includes a signal processing apparatus 110, at least one signal transceiver group (where a signal transceiver group 1 is shown in FIG. 1), and a reflective apparatus 140. The signal transceiver group 1 includes a transmitter 120 and N receivers (where a receiver 131 to a receiver 13N are shown in FIG. 1), where N is an integer greater than 0. The signal processing apparatus 110, the transmitter 120, and the receiver 131 to the receiver 13N are disposed in a cavity formed by a window and a housing. The signal processing apparatus 110 is separately connected to the transmitter 120 and the receiver 131 to the receiver 13N through communication interfaces.

The signal processing apparatus 110 is configured to control the transmitter 120 to send a first radar signal.

Optionally, the signal processing apparatus 110 may include at least one processor. The at least one processor may implement or perform the radar ranging method provided with reference to this embodiment of this specification. Alternatively, the at least one processor may be a combination of processors implementing a computing function, for example, a combination of one or more microprocessors, or a combination of digital signal processing (digital signal processing, DSP) and a microprocessor.

Optionally, there may be a plurality of types of first radar signals.

In a possible implementation, which is not an embodiment of the present invention but helpful for understanding certain aspects thereof, the first radar signal may be a millimeter-wave radar signal.

The first radar signal is a laser radar signal, for example, an optical pulse signal.

For example, the transmitter 120 may be a laser diode (laser diode, LD).

The reflective apparatus 140 is configured to: reflect the first radar signal sent by the transmitter 120, and transmit the first radar signal out of the radar ranging apparatus 100 from a first field of view on a first plane; and/or reflect, to the receiver 131 to the receiver 13N, a first echo signal that is of the first radar signal and that is received from the first field of view. The first echo signal may include an echo signal of a first target, the echo signal of the first target is generated when the first radar signal is reflected by the first target in a vision scope of the radar ranging apparatus, and the vision scope includes the first field of view.

In a possible implementation, the first plane may be parallel to a plane formed by an x-axis and a y-axis shown in FIG. 1.

It should be noted that, that the first plane is a horizontal plane is used as an example, and a vision scope of the radar ranging apparatus 100 on the horizontal plane determines a ranging scope of the radar ranging apparatus 100. The radar ranging apparatus 100 can perform ranging processing only on a target in the vision scope. When a field of view at which the target is located exceeds the vision scope, the radar ranging apparatus 100 cannot perform ranging processing on the target.

For example, when the vision scope of the radar ranging apparatus 100 on the horizontal plane is 120 degrees, and a horizontal angular resolution of the radar ranging apparatus 100 is 0.4 degrees, the radar ranging apparatus 100 has 120/0.4=300 horizontal field of views on the horizontal plane.

Optionally, the field of view may be an angle, or may be an angle range. This is not limited in embodiments of this specification.

For example, the horizontal angular resolution of the radar ranging apparatus 100 is 0.4 degrees. In this case, the radar ranging apparatus may complete radar signal sending, echo signal receiving, and ranging processing on a target within 0.4 degrees on the horizontal plane. In other words, an angle range of 0.4 degrees may correspond to one field of view.

The signal processing apparatus 110 is further configured to: control the receiver 131 to the receiver 13N to receive the first echo signal reflected through the reflective apparatus 140; and perform ranging processing on the first target based on the first echo signal according to the radar ranging method provided in embodiments of this specification.

For example, the receiver 131 to the receiver 13N may be avalanche photodiodes (avalanche photodiodes, APDs).

In a possible implementation, that the first radar signal is laser is used as an example. The signal processing apparatus 110 may measure first duration from a time point at which the radar ranging apparatus 100 sends the first radar signal to a time point at which the radar ranging apparatus 100 receives the echo signal of the first target. A product of half of the first duration (that is, duration in which the laser is transmitted by the radar ranging apparatus 100 to the first target) and a speed of light is understood as a distance between the radar ranging apparatus 100 and the first target.

In a possible implementation, the transmitter 120 and each of the receiver 131 to the receiver 13N may form one radar channel, so as to form N radar channels. The radar ranging apparatus 100 may implement radar scanning on the first plane through at least one or all of the N radar channels.

In addition, as shown in FIG. 1, when N is greater than 1, the N receivers may be disposed in a superimposition manner along a second direction. The second direction is perpendicular to the first plane. In other words, the N radar channels correspond to different locations in the second direction. Three-dimensional radar scanning is implemented through the N radar channels.

Optionally, when the radar ranging apparatus 100 includes a plurality of signal transceiver groups, the plurality of signal transceiver groups may be disposed in a superimposition manner along the second direction.

In a possible implementation, that the radar ranging apparatus 100 includes a first radar channel, and the first radar channel includes the transmitter 120 and the receiver 131 is used as an example. FIG. 2 is another schematic block diagram (a top view) of the radar ranging apparatus 100 according to an embodiment of this specification. As shown in FIG. 2, the reflective apparatus 140 may include a fixed reflecting part 141 and a rotary reflecting part 142, and reflecting surfaces of the fixed reflecting part 141 and the rotary reflecting part 142 are disposed opposite to each other.

The fixed reflecting part 141 is configured to: reflect, to the rotary reflecting part 142, the first radar signal transmitted by the transmitter 120; and/or reflect, to the receiver 131 to the receiver 13N, the first echo signal reflected from the rotary reflecting part.

The rotary reflecting part 142 is configured to: transmit the first radar signal reflected by the fixed reflecting part 141 out of the window of the radar ranging apparatus 100; and/or reflect, to the fixed reflecting part 141, the first echo signal transmitted into the radar ranging apparatus 100.

In a possible implementation, the fixed reflecting part 141 may be a first plane mirror, and/or the rotary reflecting part 142 may be a second reflecting mirror.

It should be noted that a signal transmission path shown by a solid line in FIG. 2 may be referred to as a primary signal transmission path of the first radar channel, namely, a primary signal transmission path between the transmitter 120 and the receiver 131.

Optionally, the radar ranging apparatus 100 may implement, in a plurality of manners, radar scanning on the first plane through one or more of the N radar channels. This is not limited in this embodiment of this specification.

Further, as shown in FIG. 2, the radar ranging apparatus 100 may further include a power apparatus 150. The signal processing apparatus 100 is further configured to control the power apparatus 150 to drive the rotary reflecting part 142 to rotate on the first plane by using O as an origin and based on a preset angular resolution, to implement radar scanning of the radar ranging apparatus 100 on the first plane.

Optionally, the power apparatus 150 may be an electric machine or a motor.

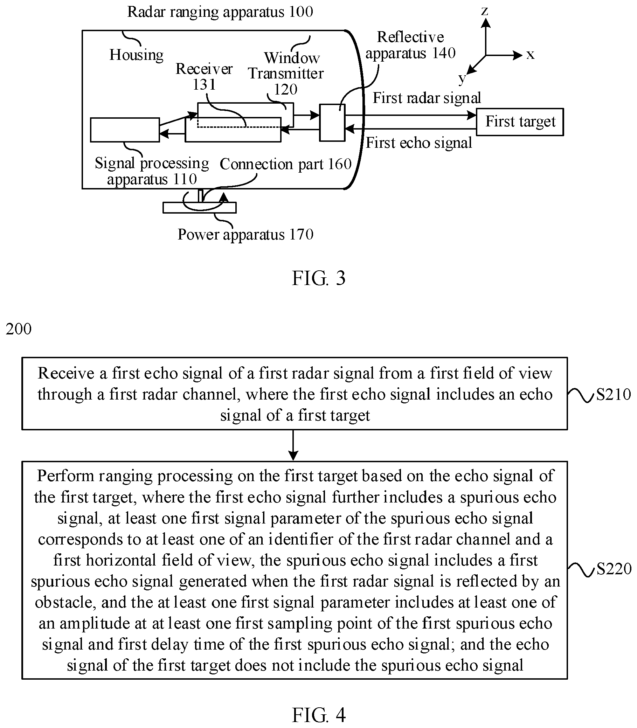

In another possible implementation, that the radar ranging apparatus 100 includes a first radar channel, and the first radar channel includes the transmitter 120 and the receiver 131 is used as an example. FIG. 3 is still another schematic block diagram (a side view) of the radar ranging apparatus 100 according to an embodiment of this specification. As shown in FIG. 3, the radar ranging apparatus 100 may further include a connection part 160 and a power apparatus 170. A lower surface of the housing of the radar ranging apparatus 100 is rotatably connected to the power apparatus 170 through the connection part 160.

The power apparatus 170 is configured to drive the housing to rotate on the first plane by using the connection part 160 as a rotating shaft and based on a preset angular resolution, to implement radar scanning of the radar ranging apparatus 100 on the first plane.

In a possible implementation, the power apparatus 170 may be an electric machine or a motor.

It should be noted that the manners in which the radar ranging apparatus 100 shown in FIG. 2 and FIG 3 implements radar scanning on the first plane are merely examples. Embodiments of this specification are not limited thereto. Optionally, the radar ranging apparatus may perform radar scanning on another plane based on similar principles described in FIG. 2 and FIG. 3. Details are not described in embodiments of this specification.

It should be noted that FIG. 1 to FIG. 3 are merely schematic diagrams of structures of the radar ranging apparatus 100 according to embodiments of this specification. Optionally, the radar ranging apparatus 100 may further include other components that are not shown in FIG. 1 to FIG. 3. Embodiments of this specification are not limited thereto.

In a current technology, when a radar ranging apparatus performs ranging on a target, because a scattering phenomenon may occur in a propagation process of a radar signal sent by a transmitter, a part of scattered signals may be reflected by an inner wall, a window, a circuit, and the like inside the radar ranging apparatus, to generate a spurious echo signal, and the spurious echo signal causes interference to an echo signal of the target. In other words, a first echo signal received by a receiver corresponding to the transmitter may include both the echo signal of the target and the spurious echo signal. Consequently, if the radar ranging apparatus performs ranging on the target based on the echo signal received by the receiver, accuracy of radar ranging may be low.

FIG, 4 is a schematic flowchart of a radar ranging method 200 according to an example, which is not an embodiment of the present invention but helpful for understanding certain aspects thereof. The method 200 may be applied to the radar ranging apparatus 100 shown in FIG. 1 to FIG. 4.

Optionally, the method 200 may be performed by the radar ranging apparatus 100 shown in FIG. 1 to FIG. 4, or may be performed by the signal processing apparatus 110 shown in FIG. 1 to FIG. 4 by controlling the radar ranging apparatus 100. For clarity, an example in which the method 200 is performed by the radar ranging apparatus is used below for description. This is not limited in this embodiment of this specification.

S210: The radar ranging apparatus sends a first radar signal from a first field of view through a first transmitter.

In a possible implementation, the first radar signal may be an optical pulse signal.

S220: The radar ranging apparatus receives a first echo signal of the first radar signal from the first field of view through a first receiver, where the first echo signal includes an echo signal of a first target, and the first transmitter and the first receiver belong to a first radar channel.

S230: The radar ranging apparatus performs ranging processing on the first target based on the echo signal of the first target, where the first echo signal further includes a spurious echo signal, the spurious echo signal includes an echo signal generated when the first radar signal is reflected by an obstacle, at least one first signal parameter of the spurious echo signal corresponds to at least one of an identifier of the first radar channel and the first field of view, and the at least one first signal parameter includes at least one of an amplitude at at least one first sampling moment and first delay time.

Optionally, the obstacle may include an object inside the radar ranging apparatus and/or an object outside the radar ranging apparatus. This is not limited in this embodiment of this specification.

In a possible implementation, the obstacle may include at least one of an inner wall, a window, or an internal circuit of the radar ranging apparatus.

In another possible implementation, the obstacle may include an object, outside the radar ranging apparatus, other than the first target.

The following describes S230 in two cases.

Case 1: The radar ranging apparatus includes only the first radar channel. In other words, the spurious echo signal includes the echo signal generated when the first radar signal is reflected by the obstacle.

Correspondingly, S230 may include: The radar ranging apparatus determines the at least one first signal parameter of the spurious echo signal based on at least one of the identifier of the first radar channel and the first field of view, determines the spurious echo signal based on the at least one first signal parameter, cancels the spurious echo signal from the first echo signal to obtain the echo signal of the first target, and performs ranging processing on the first target based on the echo signal of the first target.

Optionally, the radar ranging apparatus may determine the at least one first signal parameter in a plurality of manners based on at least one of the identifier of the first radar channel and the first field of view. This is not limited in this embodiment of this specification.

In a possible implementation, the at least one first signal parameter may correspond to only the first field of view, in other words, the first field of view and the at least one first signal parameter may meet a predefined first mapping relationship.

Correspondingly, the radar ranging apparatus may determine the at least one first signal parameter based on the first field of view and the first mapping relationship.

In another possible implementation, the at least one first signal parameter may correspond to the first field of view and the identifier of the first radar channel, in other words, the first field of view, the identifier of the first radar channel, and the at least one first signal parameter may meet the predefined first mapping relationship.

It should be noted that the at least one first signal parameter may include at least one of the amplitude at the at least one first sampling moment and the first delay time. The at least one first sampling moment may be understood as at least one sampling moment of the spurious echo signal, and the first delay time may be understood as a time difference from transmitting the first radar signal to receiving the spurious echo signal.

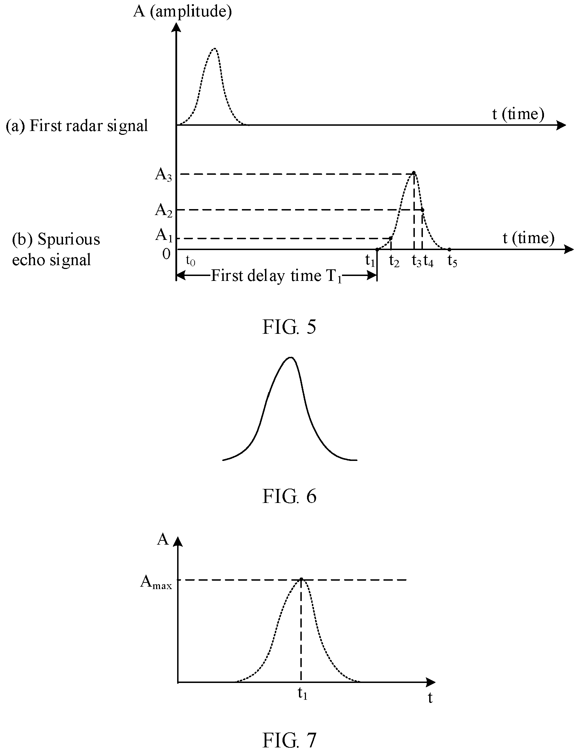

For example, the first radar signal may be shown in (a) in FIG. 5, and the spurious echo signal may be shown in (b) in FIG. 5. The first delay time T₁ represents a time difference from a start moment t₀ for transmitting the first radar signal to a start moment t₁ for receiving the spurious echo signal, and the amplitude at the at least one first sampling moment may include an amplitude A₁ at a moment t₂, an amplitude A₃ at a moment t₃, and an amplitude A₂ at a moment t₄.

In a possible implementation, when the at least one first signal parameter includes an amplitude at one first sampling moment, the radar ranging apparatus may determine the spurious echo signal based on the amplitude at the first sampling moment and preset waveform information of the spurious echo signal, where the waveform information indicates a waveform of the spurious echo signal.

For example, the waveform information is a schematic diagram of a waveform shown in FIG. 6, and the at least one first signal parameter includes an amplitude Aₘₐₓ at a wave peak of a spurious echo signal shown in FIG. 7 at a first sampling moment t₁. The radar ranging apparatus may determine, based on the schematic diagram of the waveform and the amplitude Aₘₐₓ at the first sampling moment t₁, an amplitude of the spurious echo signal at a first sampling moment other than the first sampling moment t₁, to determine the spurious echo signal.

In another possible implementation, when a quantity of the at least one first signal parameter is greater than 1, and the at least one first signal parameter includes amplitudes at a plurality of first sampling moments, the radar ranging apparatus may perform difference processing on the amplitudes at the plurality of first sampling moments by using a difference algorithm, to determine the spurious echo signal.

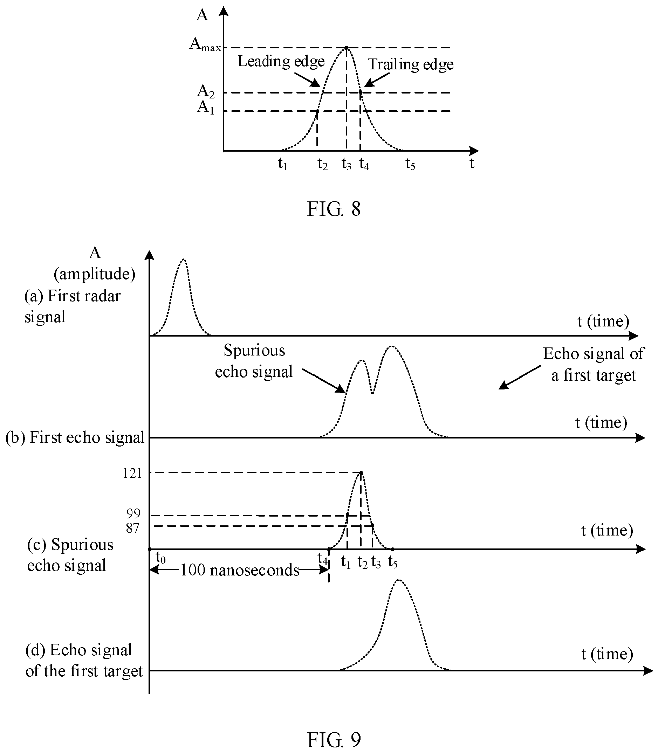

For example, the at least one first signal parameter includes an amplitude A₁ of a leading edge of a spurious echo signal shown in FIG. 8 at a first sampling moment t₂, an amplitude Aₘₐₓ at a wave peak of the spurious echo signal at a first sampling moment t₃, and an amplitude A₂ of a trailing edge of the spurious echo signal at a first sampling moment t₄. The radar ranging apparatus may calculate a difference based on amplitudes at the three first sampling moments, determine an amplitude of the spurious echo signal at a first sampling moment other than the first sampling moment t₂, the first sampling moment t₃, and the first sampling moment t₄, to determine the spurious echo signal.

Optionally, that the first field of view, the identifier of the first radar channel, and the at least one first signal parameter meet the predefined first mapping relationship is used as an example. Before S230, the radar ranging apparatus may obtain at least one mapping relationship. The at least one mapping relationship includes the first mapping relationship, and the at least one mapping relationship indicates a correspondence between an identifier of a radar channel, a field of view, and a first signal parameter.

Correspondingly, in S230, the radar ranging apparatus may obtain, based on the at least one mapping relationship, the at least one first signal parameter corresponding to the identifier of the first radar channel and the first field of view.

Optionally, the radar ranging apparatus may obtain the at least one mapping relationship in a plurality of manners. This is not limited in this embodiment of this specification.

In a possible implementation, the radar ranging apparatus may preconfigure the at least one mapping relationship.

In another possible implementation, the radar ranging apparatus may receive the at least one mapping relationship from another apparatus in advance.

In still another possible implementation, the radar ranging apparatus may generate the at least one mapping relationship.

Optionally, the at least one mapping relationship may be represented in a plurality of forms. This is not limited in this embodiment of this specification.

For example, the at least one mapping relationship may be represented by a mapping table 1 shown in the following Table 1.

**Table 1: Mapping table 1**

| Radar channel identifier | Field of view (unit: degree) | Signal parameters | |
|---|---|---|---|
| | | Amplitude at a sampling moment (unit: least significant bit (least significant bit, LSB)) | Delay time (unit: nanosecond) |
| 001 | 14.5 | t₁-99, t₂-121, t₃-87 | 100 |
| 001 | 14.9 | t₁-89, t₂-115, t₃-79 | 102 |
| 002 | 14.5 | t₁-101, t₂-111, t₃-81 | 110 |

For example, the identifier of the first radar channel is 001, and the first field of view is 14.5 degrees. FIG. 9 is a schematic diagram of a signal processing process in the radar ranging method 200 according to an embodiment of this specification. The first radar signal transmitted by the radar ranging apparatus from the first field of view through the first radar channel may be shown in (a) in FIG. 9. The first echo signal received by the radar ranging apparatus may be shown in (b) in FIG. 9. The first echo signal may include the echo signal of the first target and the spurious echo signal. The radar ranging apparatus may look up the mapping table 1 shown in Table 1 by using the identifier 001 and the first field of view 14.5 degrees (°), to obtain that the at least one first signal parameter includes the amplitude 99 at the sampling moment t₁, the amplitude 121 at the sampling moment t₂, and the amplitude 87 at the sampling moment t₃, and that the delay time (t₀ to t₄) is 100 nanoseconds (ns). The radar ranging apparatus may obtain, based on the at least one first signal parameter, a spurious echo signal shown in (c) in FIG. 9. The radar ranging apparatus cancels the spurious echo signal shown in (c) in FIG. 9 from the first echo signal shown in (b) in FIG. 9, to obtain an echo signal of the first target shown in (d) in FIG. 9, and performs ranging processing on the first target based on the echo signal of the first target.

It should be noted that, that the echo signal of the first target and the spurious echo signal in the first echo signal in FIG. 9 are not superimposed is merely an example. This embodiment of this specification is not limited thereto. Optionally, the radar ranging method 200 provided in this embodiment of this specification is also applicable to a case in which the echo signal of the first target and the spurious echo signal are superimposed together. This is not limited in this embodiment of this specification.

According to the radar ranging method provided in this embodiment of this specification, the at least one statically set mapping relationship is queried based on at least one of the identifier of the first radar channel and the first field of view, the at least one first signal parameter corresponding to the first radar channel and/or the first field of view is obtained based on the at least one mapping relationship, the spurious echo signal is determined based on the at least one first signal parameter, the spurious echo signal is canceled from the first echo signal to obtain the echo signal of the first target, and the ranging processing is performed on the first target based on the echo signal of the first target. In this way, interference and impact of the spurious echo signal on the echo signal of the first target can be avoided, in other words, purity of the echo signal of the first target can be improved, and therefore accuracy of radar ranging can be improved.

It should be noted that, because the amplitude at the first sampling moment and/or the first delay time may change with an operating temperature of the radar ranging apparatus, the at least one first signal parameter may represent a signal parameter at a first operating temperature, in other words, at least one of the identifier of the first radar channel and the first field of view, the first operating temperature, and the at least one first signal parameter may meet a predefined first mapping relationship.

Correspondingly, S230 may include: The radar ranging apparatus determines the at least one first signal parameter based on the first operating temperature and at least one of the identifier of the first radar channel and the first field of view.

For example, the at least one mapping relationship may alternatively be represented by a mapping table 2 shown in the following Table 2.

**Table 2: Mapping table 2**

| Radar channel identifier | Field of view (unit: degree) | Temperature (unit: degree Celsius) | Signal parameters | |
|---|---|---|---|---|
| | | | Amplitude at a sampling moment (unit: LSB) | Delay time (unit: nanosecond) |
| 001 | 14.5 | -10 | t₁-99, t₂-121, t₃-87 | 100 |
| | | -9 | t₁-94, t₂-115, t₃-86 | 100.3 |
| | | ... | ... | ... |
| | | 85 | t₁-69, t₂-85, t₃-61 | 108 |
| 001 | 14.9 | -10 | t₁-89, t₂-115, t₃-79 | 102 |
| | | -9 | t₁-84, t₂-108, t₃-74 | 102.4 |
| | | ... | ... | ... |
| | | 85 | t₁-53, t₂-59, t₃-47 | 109 |
| 002 | 14.5 | -10 | t₁-101, t₂-111, t₃-81 | 110 |
| | | -9 | t₁-91, t₂-100, t₃-73 | 110.2 |
| | | ... | ... | ... |
| | | 85 | t₁-61, t₂-67, t₃-49 | 116 |

It should be noted that a signal parameter corresponding to an operating temperature that is not shown in Table 2 may be obtained through calculation based on signal parameters corresponding to existing operating temperatures. This is not limited in this embodiment of this specification.

For example, the identifier of the first radar channel is 001, and the first field of view is 14.5°. The radar ranging apparatus may determine, based on the delay time 100 ns corresponding to the operating temperature -10°C and the delay time 100.3 ns corresponding to the operating temperature -9°C that are shown in Table 2, that delay time corresponding to an operating temperature -9.5°C is (100+100.3)/2=100.15 ns.

It should be further noted that, because the mapping table 2 needs to include a first signal parameter at each operating temperature, and therefore the radar ranging apparatus needs to store a large amount of data, it may be considered that only a first signal parameter at a standard operating temperature is stored, and a variation value of a first signal parameter at another operating temperature compared with the first signal parameter at the standard operating temperature is incrementally stored, so that an amount of stored data can be reduced.

For another example, the mapping table 2 shown in Table 2 may alternatively be represented by a mapping table 3 shown in the following Table 3.

**Table 3: Mapping table 3**

| Radar channel identifier | Field of view (unit: degree) | Temperature (unit: degree Celsius) | Signal parameters | | Incremental information | |
|---|---|---|---|---|---|---|
| | | | Amplitude at a sampling moment (unit: LSB) | Delay time (unit: nanosecond) | Amplitude coefficient | Delay time difference (unit: nanosecond) |
| 001 | 14.5 | -10 | t₁-99 | 100 | 1 | 0 |
| | | -9 | t₂-121 | | 0.95 | +0.3 |
| | | ... | t₃-87 | | ... | ... |
| | | 85 | | | 0.7 | +8 |
| 001 | 14.9 | -10 | t₁-89 | 102 | 1 | 0 |
| | | -9 | t₂-115 | | 0.94 | +0.4 |
| | | ... | t₃-79 | | ... | ... |
| | | 85 | | | 0.6 | +7 |
| 002 | 14.5 | -10 | t₁-101 | 110 | 1 | 0 |
| | | -9 | t₂-111 | | 0.9 | +0.2 |
| | | ... | t₃-81 | | ... | ... |
| | | 85 | | | 0.6 | +6 |

For example, the identifier of the first radar channel is 001, the first field of view is 14.5°, and the first operating temperature is -9°C. The radar ranging apparatus may look up the mapping table 3 shown in Table 3 by using the identifier 001, the first field of view 14.5°, and the first operating temperature -9°C, to obtain the amplitude 99 at the sampling moment t₁ at the standard temperature, the amplitude 121 at the sampling moment t₂ at the standard temperature, the amplitude 87 at the sampling moment t₃ at the standard temperature, the delay time 100 ns at the standard temperature, the amplitude coefficient 0.95, and the delay time difference +0.3 ns. The amplitude coefficient indicates a ratio of an amplitude at a sampling moment at the first operating temperature to an amplitude at the sampling moment at the standard operating temperature. The delay time difference indicates a time difference between delay time at the first operating temperature and delay time at the standard temperature.

Correspondingly, the radar ranging apparatus may multiply the amplitude coefficient 0.95 and each of the amplitude 99 at the sampling moment t₁ at the standard temperature, the amplitude 121 at the sampling moment t₂ at the standard temperature, and the amplitude 87 at the sampling moment t₃ at the standard temperature, to obtain an amplitude 94.05 at the sampling moment t₁ at the first operating temperature -9°C, an amplitude 114.95 at the sampling moment t₂ at the first operating temperature -9°C, and an amplitude 82.62 at the sampling moment t₃ at the first operating temperature -9°C. In addition, the radar ranging apparatus adds the delay time 100 ns at the standard temperature and the delay time difference 0.3 ns, to obtain delay time 100.3 ns at the first operating temperature -9°C.

According to the radar ranging method provided in this embodiment of this specification, the at least one statically set mapping relationship is queried based on the current first operating temperature and at least one of the identifier of the first radar channel and the first field of view, the at least one first signal parameter corresponding to the first operating temperature and the identifier of the first radar channel and/or the first field of view is obtained based on the at least one mapping relationship, the spurious echo signal is determined based on the at least one first signal parameter, the spurious echo signal is canceled from the first echo signal to obtain the echo signal of the first target, and the ranging processing is performed on the first target based on the echo signal of the first target. In this way, the interference and the impact of the spurious echo signal on the echo signal of the first target can be avoided, and therefore the accuracy of radar ranging can be improved.

Optionally, in S230, the radar ranging apparatus may cancel the spurious echo signal from the first echo signal in a plurality of manners, to obtain the echo signal of the first target. This is not limited in this embodiment of this specification.

In a possible implementation, that the spurious echo signal includes P sampling moments, the P sampling moments correspond to P first amplitudes on the spurious echo signal, the first echo signal includes the P sampling moments and Q sampling moments, the P sampling moments correspond to P second amplitudes on the first echo signal, the Q sampling moments correspond to Q third amplitudes on the first echo signal, and both P and Q are integers greater than 0 is used as an example. The echo signal of the first target may include the P sampling moments and the Q sampling moments. The P sampling moments correspond to P target amplitudes on the echo signal of the first target, and a target amplitude corresponding to each of the P sampling moments is a difference between a first amplitude and a second amplitude. The Q sampling moments correspond to the Q third amplitudes on the echo signal of the first target.

An example is provided below: The spurious echo signal includes three sampling moments, for example, a sampling moment t₁ to a sampling moment t₃, where a first amplitude corresponding to the sampling moment t₁ is 110.3 (where a unit is omitted), a first amplitude corresponding to a sampling moment t₂ is 116, and a first amplitude corresponding to the sampling moment t₃ is 114.7. The first echo signal includes six sampling moments, for example, the sampling moment t₁ to a sampling moment t₆, where a second amplitude corresponding to the sampling moment t₁ is 109.1, a second amplitude corresponding to the sampling moment t₂ is 116, a second amplitude corresponding to the sampling moment t₃ is 112.4, a third amplitude corresponding to a sampling moment t₄ is 125.6, a third amplitude corresponding to a sampling moment t₅ is 120.6, and a third amplitude corresponding to the sampling moment t₆ is 118.9. In this case, the spurious echo signal includes the sampling moment t₁ to the sampling moment t₆, where a target amplitude corresponding to the sampling moment t₁ is 110.3-109.1=1.2, a target amplitude corresponding to the sampling moment t₂ is 116-116=0, a target amplitude corresponding to the sampling moment t₃ is 114.7-112.4=2.3, a target amplitude corresponding to the sampling moment t₄ is 125.6, a target amplitude corresponding to the sampling moment t₅ is 120.6, and a target amplitude corresponding to the sampling moment t₆ is 118.9.

It should be noted that, because target amplitudes corresponding to the sampling moment t₁ to the sampling moment t₃ are less than or equal to a preset jitter threshold 5, the target amplitudes corresponding to the sampling moment t₁ to the sampling moment t₃ may be filtered out in a denoising processing process. Therefore, the echo signal of the first target may include only target amplitudes corresponding to the sampling moment t₄ to the sampling moment t₆.

Case 2: The radar ranging apparatus includes a plurality of radar channels, and at least two of the plurality of radar channels belong to different signal transceiver groups.

Optionally, that the at least two radar channels include the first radar channel and a second radar channel, and the second radar channel includes a second transmitter is used as an example. Before S230, the method 200 may further include: The radar ranging apparatus sends a second radar signal from a second field of view through the second transmitter.

In other words, the spurious echo signal includes a first spurious echo signal generated when the first radar signal is reflected by the obstacle and a second spurious echo signal generated when the second radar signal is reflected by the obstacle.

Correspondingly, S230 may include: The radar ranging apparatus determines at least one first signal parameter of the first spurious echo signal based on at least one of the identifier of the first radar channel and the first field of view, determines the first spurious echo signal based on the at least one first signal parameter, determines at least one second signal parameter of the second spurious echo signal based on at least one of an identifier of the second radar channel and the second field of view, determines the second spurious echo signal based on the at least one second signal parameter, cancels the first spurious echo signal and the second spurious echo signal from the first echo signal to obtain the echo signal of the first target, and performs ranging processing on the first target based on the echo signal of the first target.

Optionally, the first field of view and the second field of view may be the same, or may be different. This is not limited in this embodiment of this specification.

It should be noted that, for a process in which the radar ranging apparatus determines the at least one second signal parameter of the second spurious echo signal based on at least one of the identifier of the second radar channel and the second field of view, refer to the process in which the radar ranging apparatus determines the at least one first signal parameter of the spurious echo signal based on at least one of the identifier of the first radar channel and the first field of view in the case 1. To avoid repetition, details are not described herein again.

It should be further noted that, for a process in which the radar ranging apparatus cancels the first spurious echo signal and the second spurious echo signal from the first echo signal to obtain the echo signal of the first target, refer to the process in which the radar ranging apparatus cancels the spurious echo signal from the first echo signal to obtain the echo signal of the first target in the case 1.

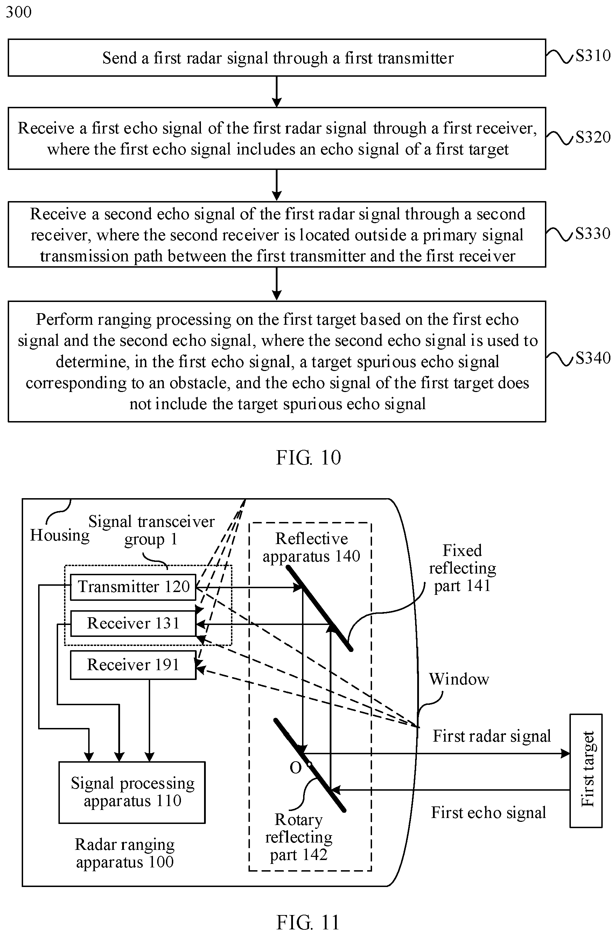

The foregoing describes, with reference to FIG 4 to FIG. 9, the radar ranging method 200 provided in examples of this specification. The following describes, with reference to FIG. 10 to FIG. 14, a radar ranging method 300 provided in embodiments of the invention.

FIG. 10 is a schematic flowchart of a radar ranging method 300 according to an embodiment of the invention. The method 300 may be applied to the radar ranging apparatus 100 shown in FIG. 1 to FIG. 4.

Optionally, the method 300 may be performed by the radar ranging apparatus 100 shown in FIG. 1 to FIG. 4, or may be performed by the signal processing apparatus 110 shown in FIG. 1 to FIG. 4 by controlling the radar ranging apparatus 100. For clarity, an example in which the method 300 is performed by the radar ranging apparatus is used below for description. This is not limited in this embodiment of this specification.

S310: The radar ranging apparatus sends a first radar signal through a first transmitter.

S320: The radar ranging apparatus receives a first echo signal of the first radar signal through a first receiver, where the first echo signal includes an echo signal of a first target.

S330: The radar ranging apparatus receives a second echo signal of the first radar signal through a second receiver, where the second receiver is located outside a primary signal transmission path between the first transmitter and the first receiver.

In other words, the primary signal transmission path between the first transmitter and the first receiver includes the first target, and therefore the first echo signal received by the first receiver includes the echo signal of the first target. In addition, the second receiver is located outside the primary signal transmission path, and therefore the second echo signal received by the second receiver does not include the echo signal of the first target.

Optionally, the radar ranging apparatus may include a first signal transceiver group and a second signal transceiver group. The first signal transceiver group includes the first transmitter and the first receiver. The second signal transceiver group includes the second receiver and a second transmitter, and the radar ranging apparatus does not send a radar signal through the second transmitter. Alternatively, the second receiver may be a receiver additionally disposed outside the primary signal transmission path between the first transmitter and the first receiver. This is not limited in this embodiment of this specification.

For example, as shown in FIG. 11, the first transmitter may be a transmitter 120, the first receiver may be a receiver 131, the second receiver may be a receiver 191, a primary signal transmission path between the transmitter 120 and the receiver 131 is shown by a solid line, and the receiver 191 is located outside the primary signal transmission path. Therefore, the first echo signal received by the receiver 131 includes the echo signal of the first target, and the second echo signal received by the receiver 191 does not include the echo signal of the first target.

For example, the first transmitter may be an LD, the first receiver may be an APD, and the second receiver may be a photodiode (positive intrinsic-negative, PIN).

S340: The radar ranging apparatus performs ranging processing on the first target based on the first echo signal and the second echo signal, where the second echo signal is used to determine a target spurious echo signal corresponding to an obstacle, and the echo signal of the first target does not include the target spurious echo signal.

Optionally, the obstacle may include an object inside the radar ranging apparatus and/or an object outside the radar ranging apparatus. This is not limited in this embodiment of this specification.

In a possible implementation, the obstacle may include at least one of an inner wall of a housing, a window, or an internal circuit of the radar ranging apparatus.

In another possible implementation, the obstacle may further include an object, outside the radar ranging apparatus, other than the first target.

S340 includes: The radar ranging apparatus determines the target spurious echo signal corresponding to the obstacle based on the second echo signal, cancels the target spurious echo signal from the first echo signal to obtain the echo signal of the first target, and performs ranging processing on the first target based on the echo signal of the first target.

It should be noted that, as shown in FIG. 11, because a scattering phenomenon may occur in a propagation process of the first radar signal, a part of scattered signals may be reflected to the second receiver by the obstacle, for example, the inner wall, the window, or the circuit inside the radar ranging apparatus. In other words, the second echo signal received by the second receiver may include a first spurious echo signal corresponding to the obstacle, and the first echo signal received by the first receiver may further include a second spurious echo signal corresponding to the obstacle.

However, because the first receiver and the second receiver are located at different locations, delay time and/or amplitudes of the first spurious echo signal and the second spurious echo signal may be different. Therefore, when the first spurious echo signal is directly used to cancel the second spurious echo signal from the first echo signal, incomplete cancellation (in other words, purity of the echo signal of the first target that is obtained after cancellation is low) or excessive cancellation (in other words, a part of the echo signal of the first target that is obtained after cancellation is missing) may exist, resulting in poor accuracy of radar ranging performed based on the echo signal of the first target.

Optionally, the radar ranging apparatus may determine, based on the first spurious echo signal, the target spurious echo signal corresponding to the obstacle, where the target spurious echo signal may be considered to be the most similar to the target spurious echo signal in the first echo signal; and cancel the target spurious echo signal from the first echo signal to obtain the echo signal of the first target.

In a possible implementation, the radar ranging apparatus may correct the first spurious echo signal based on the first echo signal, to obtain the target spurious echo signal.

Optionally, the radar ranging apparatus may correct the first spurious echo signal based on the first echo signal in a plurality of manners, to obtain the target spurious echo signal. This is not limited in this embodiment of this specification.

The radar ranging apparatus adjusts delay time of the first spurious echo signal a plurality of times to obtain a plurality of first adjusted signals, determines a ratio of an amplitude of the first echo signal at a first sampling moment to an amplitude of each of the plurality of first adjusted signals at the first sampling moment as an amplitude coefficient of each first adjusted signal, multiplies each first adjusted signal and the amplitude coefficient of each first adjusted signal to obtain a plurality of second adjusted signals, and determines the target spurious echo signal based on the plurality of second adjusted signals and the first echo signal.

Optionally, when the second spurious echo signal in the first echo signal and a first target echo signal are not superimposed, the first sampling moment may be any sampling moment on the second spurious echo signal. Alternatively, when the second spurious echo signal in the first echo signal and a first target echo signal are superimposed, the first sampling moment may be a sampling moment corresponding to a peak of the second spurious echo signal or a sampling moment on a leading edge of the second spurious echo signal. Alternatively, when saturation exists on the second spurious echo signal, the first sampling moment may be a sampling moment on a leading edge of the second spurious echo signal except a saturation interval.

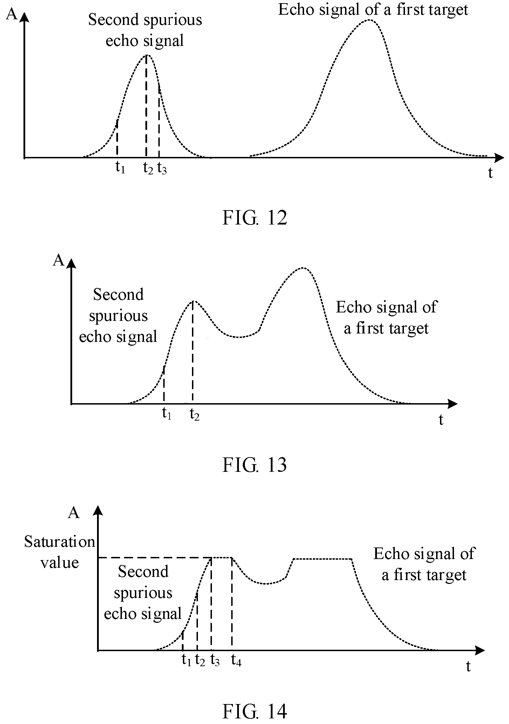

For example, the first echo signal is shown in FIG. 12, and the first sampling moment may be any sampling moment on the first echo signal, for example, a sampling moment t₁, a sampling moment t₂, or a sampling moment t₃.

For another example, the first echo signal is shown in FIG. 13, and the first sampling moment may be a sampling moment t₂ corresponding to a wave peak of the first echo signal, or the first sampling moment may be a sampling moment t₁ on a leading edge of the first echo signal.

For another example, the first echo signal is shown in FIG. 14, and the first sampling moment may be a sampling moment t₁ or a sampling moment t₂ on a leading edge of the first echo signal except a saturation interval t₃ to t₄.

That the radar ranging apparatus determines the target spurious echo signal based on the plurality of second adjusted signals and the first echo signal includes: The radar ranging apparatus performs minimum mean square error processing on each of the plurality of second adjusted signals and the first echo signal, to obtain a plurality of processing results, where a smaller value of the processing result indicates that a second adjusted signal corresponding to the processing result is more similar to the target spurious echo signal; and determines a second adjusted signal corresponding to a smallest value in those of the plurality of processing results as the target spurious echo signal.

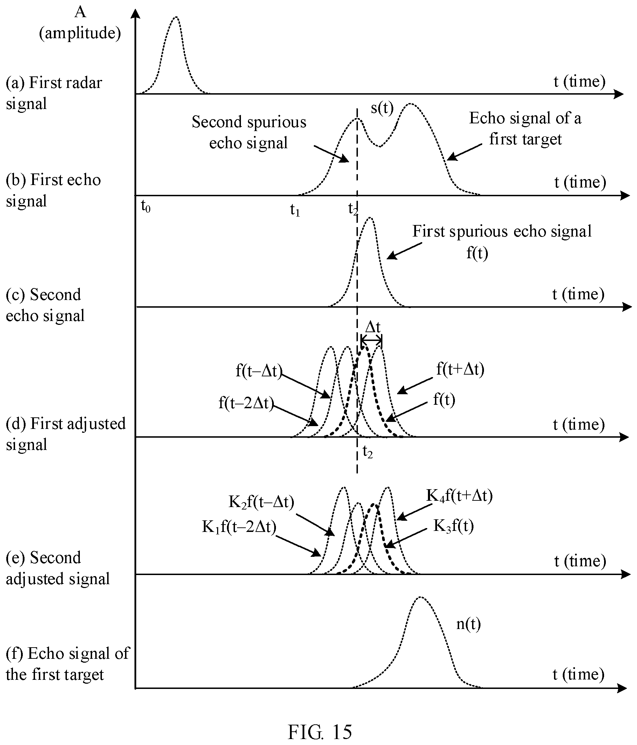

For example, FIG. 15 is a schematic diagram of a signal processing process in the radar ranging method 300 according to an embodiment of the invention. The first radar signal transmitted by the radar ranging apparatus through the first transmitter may be shown in (a) in FIG. 15. The first echo signal received by the radar ranging apparatus through the first receiver may be shown in (b) in FIG. 15. The first echo signal includes the second spurious echo signal corresponding to the obstacle and the echo signal of the first target. The second echo signal received by the radar ranging apparatus through the second receiver may be shown in (c) in FIG. 15. The second echo signal includes the first spurious echo signal corresponding to the obstacle.

For example, the first echo signal is s(t), and the first spurious echo signal is f(t). The radar ranging apparatus may adjust the delay time of the first spurious echo signal a plurality of times based on a preset delay time difference Δt, to obtain a plurality of first adjusted signals, for example, f(t-2Δt), f(t-Δt), f(t), and f(t+Δt) shown in (d) in FIG. 15. A ratio K₁ of an amplitude A0 of the first echo signal at a sampling moment t₂ to an amplitude A1 of f(t-2Δt) at the sampling moment t₂ is A0/A1, a ratio K₂ of A0 to an amplitude A2 of f(t-Δt) at the sampling moment t₂ is A0/A2, a ratio K₃ of A0 to an amplitude A3 of f(t) at the sampling moment t₂ is A0/A3, and a ratio K₄ of A0 to an amplitude A4 of f(t+Δt) at the sampling moment t₂ is A0/A4. The radar ranging apparatus may obtain a plurality of second adjusted signals based on f(t-2Δt) and the amplitude coefficient K₁, f(t-Δt) and the amplitude coefficient K₂, f(t) and the amplitude coefficient K₃, and f(t+Δt) and the amplitude coefficient K₄. The plurality of second adjusted signals are, for example, K₁f(t-2Δt), K₂f(t-Δt), K₃f(t), and K₄f(t+Δt) shown in (e) in FIG. 15. The radar ranging apparatus may perform minimum mean square error processing on the first echo signal s(t) and each of K₁f(t-2Δt), K₂f(t-Δt), K₃f(t), and K₄f(t+Δt), to obtain a plurality of processing results. For example, a processing result corresponding to K₂f(t-Δt) has a smallest value in the plurality of processing results, and the radar ranging apparatus may determine the second adjusted signal K₂f(t-Δt) as a target spurious echo signal, cancels the target spurious echo signal K₂f(t-Δt) from the first echo signal s(t), to obtain an echo signal n(t)=s(t)-K₂f(t-Δt) of the first target, and performs ranging processing on the first target based on n(t).

It should be noted that, if an amplitude of the target spurious echo signal K₂f(t-Δt) at a sampling moment exceeds a saturation value of the target spurious echo signal, the radar ranging apparatus may use the saturation value of the target spurious echo signal as an amplitude at the sampling moment.

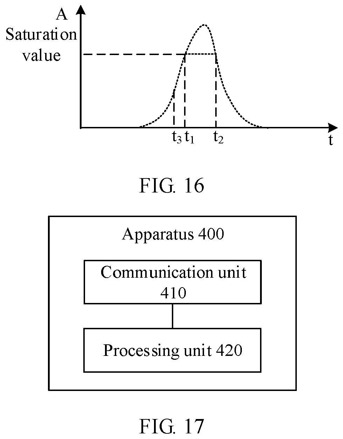

For example, FIG. 16 is a schematic diagram of a waveform of the target spurious echo signal. As shown in FIG. 16, amplitudes corresponding to all sampling moments in an interval from a sampling moment t₁ to a sampling moment t₂ on the target spurious echo signal exceed the saturation value of the target spurious echo signal. Therefore, the radar ranging apparatus may use the saturation value as an amplitude at each sampling moment of a saturation interval, that is, from the sampling moment t₁ to the sampling moment t₂.

According to the radar ranging method provided in this embodiment of invention, the radar ranging apparatus can cancel, based on the second spurious echo signal received in real time, the target spurious echo signal corresponding to the obstacle from the first echo signal, so that interference caused by the spurious echo signal to the echo signal of the first target can be reduced, in other words, purity of the echo signal of the first target can be improved, and therefore accuracy of radar ranging can be improved.

Because the echo signal of the first target and the second spurious echo signal that are included in the first echo signal may be superimposed, and even an amplitude obtained after superimposition may exceed a saturation value of the first echo signal in some cases, saturation distortion is caused (as shown in FIG. 14). In this way, the echo signal of the first target may cause interference to correction, resulting in low purity and poor accuracy of the target spurious echo signal obtained after correction.

In another possible implementation not according to the present invention, that the radar ranging apparatus determines the target spurious echo signal based on the plurality of second adjusted signals and the first echo signal may include: The radar ranging apparatus performs minimum mean square error processing on the plurality of second adjusted signals and the first echo signal in a first sampling interval, to obtain a plurality of processing results, where a smaller value of the processing result indicates that a second adjusted signal corresponding to the processing result is more similar to the target spurious echo signal; and determines an adjusted signal corresponding to a smallest value in those of the plurality of processing results as the target spurious echo signal.

Optionally, the preset first sampling interval may be a sampling interval on the leading edge of the second spurious echo signal. If saturation exists on the second spurious echo signal, the first sampling interval does not include a sampling moment in the saturation interval.

For example, as shown in FIG. 13, the first sampling interval may be the sampling moment t₁ to the sampling moment t₂.

For another example, as shown in FIG. 14, the first sampling interval may be the sampling moment t₁ to the sampling moment t₂.

In still another possible implementation not according to the present invention, the radar ranging apparatus may estimate, from the first echo signal by using a Gaussian decomposition algorithm, the second spurious echo signal corresponding to the obstacle, and correct the first spurious echo signal based on the second spurious echo signal, to obtain the target spurious echo signal.

According to this implementation, the radar ranging apparatus estimates the second spurious echo signal from the first echo signal by using the Gaussian decomposition algorithm, and corrects the first spurious echo signal based on the second spurious echo signal. In this way, purity and accuracy of the target spurious echo signal can be improved, and therefore accuracy of radar ranging can be improved.

In a possible implementation not according to the present invention, the radar ranging apparatus may adjust the delay time of the first spurious echo signal a plurality of times to obtain the plurality of first adjusted signals, determine a ratio of an amplitude of the second spurious echo signal at the first sampling moment to the amplitude of each of the plurality of first adjusted signals at the first sampling moment as an amplitude coefficient of each first adjusted signal, multiply each first adjusted signal and the amplitude coefficient of each first adjusted signal to obtain a plurality of second adjusted signals, and determine the target spurious echo signal based on the plurality of second adjusted signals and the second spurious echo signal.

In a possible implementation not according to the present invention, that the radar ranging apparatus determines the target spurious echo signal based on the plurality of second adjusted signals and the second spurious echo signal may include: The radar ranging apparatus performs minimum mean square error processing on the plurality of second adjusted signals and the second spurious echo signal, to obtain a plurality of processing results, where a smaller value of the processing result indicates that a second adjusted signal corresponding to the processing result is more similar to the target spurious echo signal; and determines a second adjusted signal corresponding to a smallest value in those of the plurality of processing results as the target spurious echo signal.

It should be noted that, for a process in which the radar ranging apparatus corrects the first spurious echo signal based on the second spurious echo signal to obtain the target spurious echo signal, refer to the process shown in FIG. 15 in which the radar ranging apparatus corrects the first spurious echo signal based on the first echo signal. To avoid repetition, details are not described herein again.

It should be further noted that, for a process in S340 in which the radar ranging apparatus cancels the target spurious echo signal from the first echo signal to obtain the echo signal of the first target, refer to the process in which the radar ranging apparatus cancels the spurious echo signal from the first echo signal to obtain the echo signal of the first target in S230 in the embodiment of the method 200. To avoid repetition, details are not described herein again.

The foregoing describes, with reference to FIG. 4 to FIG. 16, the radar ranging methods provided in embodiments of this specification. The following describes, with reference to FIG. 17, a signal processing apparatus 400 configured to perform the foregoing method.

It should be noted that the signal processing apparatus 400 may be the signal processing apparatus in the foregoing method embodiments. This is not limited in this embodiment of this specification.

It may be understood that, to implement the foregoing functions, the signal processing apparatus 400 includes corresponding hardware and/or software modules for performing the functions. With reference to the example algorithm steps described in the embodiments disclosed in this specification, embodiments of this specification can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this specification.

In embodiments of this specification, the signal processing apparatus 400 may be divided into functional modules based on the foregoing method examples. For example, each functional module may be obtained through division based on each corresponding function, or two or more functions may be integrated into one processing module. The integrated module may be implemented in a form of hardware. It should be noted that, in embodiments of this specification, division into the modules is an example and is merely logical function division, and may be other division during actual implementation.

When each functional module is obtained through division based on each corresponding function, FIG 17 is a schematic block diagram of the signal processing apparatus 400 in the foregoing embodiment. As shown in FIG. 17, the signal processing apparatus 400 may include a transceiver unit 410 and a processing unit 420. The processing unit 420 may control the transceiver unit 410 to implement the radar ranging method in the foregoing method embodiments, and/or another process of the technology described in this specification.

It should be noted that the transceiver unit 410 is obtained through functional division of the transceiver (including each transmitter and/or each receiver) in the foregoing embodiments.

It should be noted that, all related content of the steps in the foregoing method embodiments may be cited in function descriptions of corresponding functional modules. Details are not described herein again.

The signal processing apparatus 400 provided in this embodiment is configured to perform the foregoing method embodiments, and therefore can achieve same effects as the foregoing implementation methods.

When an integrated unit is used, the signal processing apparatus 400 may include a processing unit, a storage unit, and a communication unit. The processing unit may be configured to control and manage an action of the signal processing apparatus 400, for example, may be configured to support the signal processing apparatus 400 in performing the steps performed by the foregoing units. The storage unit may be configured to support the signal processing apparatus 400 in storing program code, data, and the like. The communication unit may be configured to support the signal processing apparatus 400 in communicating with another device.

The processing unit may be a processor or a controller. The processing unit may implement or execute various example logical blocks, modules, and circuits described with reference to content disclosed in this specification. Alternatively, the processor may be a combination of processors implementing a computing function, for example, a combination of one or more microprocessors, or a combination of digital signal processing (digital signal processing, DSP) and a microprocessor. The storage unit may be a memory. The communication unit may be specifically a device, for example, a radio frequency circuit, a Bluetooth chip, or a Wi-Fi chip, that communicates with another electronic device.

Optionally, the signal processing apparatus 400 may be a chip or a system on chip in the radar ranging apparatus in the foregoing embodiments.

An embodiment of this specification further provides a computer storage medium. The computer storage medium stores computer instructions. When the computer instructions are run on an electronic device, the electronic device is enabled to perform the related method steps, to implement the radar ranging method in the foregoing embodiments.

An embodiment of this specification further provides a computer program product. When the computer program product runs on a computer, the computer is enabled to perform the related steps, to implement the radar ranging method in the foregoing embodiments.

The signal processing apparatus, the radar ranging apparatus, the computer storage medium, the computer program product, and the chip provided in embodiments are all configured to perform the corresponding method provided above. Therefore, for beneficial effects that can be achieved by the signal processing apparatus, the radar ranging apparatus, the computer storage medium, the computer program product, or the chip, refer to the beneficial effects in the corresponding method provided above. Details are not described herein again.

It should be understood that sequence numbers of the foregoing processes do not mean execution sequences in embodiments of this specification. The execution sequences of the processes should be determined based on functions and internal logic of the processes, and should not constitute any limitation on implementation processes of embodiments of this specification.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this specification.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this specification, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this specification may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this specification essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this specification. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this specification, but are not intended to limit the protection scope of this specification. Any variation or replacement readily figured out by a person skilled in the art within the technical scope disclosed in this specification might fall within the protection scope defined by the appended claims.

## Claims

1. A radar ranging method, wherein the method comprises:
sending (S310) a first radar signal through a first transmitter, wherein the first radar signal is a laser radar signal;
receiving (S320) a first echo signal of the first radar signal through a first receiver, wherein the first echo signal comprises an echo signal of a first target;
receiving (S330) a second echo signal of the first radar signal through a second receiver, wherein the second receiver is located outside a primary signal transmission path between the first transmitter and the first receiver; and
performing (S340) ranging processing on the first target based on the first echo signal and the second echo signal, wherein
the second echo signal is used to determine a target spurious echo signal corresponding to an obstacle, and the echo signal of the first target does not comprise the target spurious echo signal;
**characterized in that**
the second echo signal comprises a first spurious echo signal corresponding to the obstacle, and the target spurious echo signal is obtained based on the first spurious echo signal and the first echo signal;
the first spurious echo signal is generated when the first radar signal is reflected by the obstacle;
a delay time of the first spurious echo signal is adjusted a plurality of times to obtain a plurality of first adjusted signals, a ratio of an amplitude of the first echo signal at a first sampling moment to an amplitude of each of the plurality of first adjusted signals at the first sampling moment is determined as an amplitude coefficient of each first adjusted signal, each first adjusted signal and the amplitude coefficient of each first adjusted signal are multiplied to obtain a plurality of second adjusted signals, and the target spurious echo signal is determined based on the plurality of second adjusted signals and the first echo signal, wherein
minimum mean square error processing is performed on each of the plurality of second adjusted signals and the first echo signal, to obtain a plurality of processing results, where a smaller value of the processing result indicates that a second adjusted signal corresponding to the processing result is more similar to the target spurious echo signal; and a second adjusted signal corresponding to a smallest value in those of the plurality of processing results is determined as the target spurious echo signal,
the target spurious echo signal is cancelled from the first echo signal to obtain the echo signal of the first target, and
the ranging processing is performed based on the echo signal of the first target.

2. The method according to claim 1, wherein the obstacle comprises at least one of an inner wall of a housing, a window, or an internal circuit of a radar ranging apparatus (100).

3. A radar ranging apparatus (100) including a signal processing apparatus (110), at least one signal transceiver group (1), and a reflective apparatus (140) adapted to execute the method according to claim 1 or 2.

4. A computer program product comprising instructions to cause a computer connected to a first transmitter configured for sending a first radar signal, wherein the first radar signal is a laser radar signal, a first receiver configured for receiving a first echo signal of the first radar signal, and to a second receiver, configured for receiving a second echo signal of the first radar signal, the second receiver being located outside a primary signal transmission path between the first transmitter and the first receiver, to execute the steps of the method of claim 1 or 2.

5. A computer-readable storage medium having stored thereon the computer program product of claim 4.

## Patentansprüche

1. Radarentfernungsmessverfahren, wobei das Verfahren umfasst:
Senden (S310) eines ersten Radarsignals durch einen ersten Sender, wobei das erste Radarsignal ein Laser-Radarsignal ist;
Empfangen (S320) eines ersten Echosignals des ersten Radarsignals durch einen ersten Empfänger, wobei das erste Echosignal ein Echosignal eines ersten Ziels umfasst;
Empfangen (S330) eines zweiten Echosignals des ersten Radarsignals durch einen zweiten Empfänger, wobei sich der zweite Empfänger außerhalb eines primären Signalübertragungspfads zwischen dem ersten Sender und dem ersten Empfänger befindet; und
Durchführen (S340) von Entfernungsmessungsverarbeitung an dem ersten Ziel auf der Grundlage des ersten Echosignals und des zweiten Echosignals, wobei
das zweite Echosignal verwendet wird zum Bestimmen eines Ziel-Störechosignals, einem Hindernis korrespondierend, und das Echosignal des ersten Ziels das Ziel-Störechosignal nicht umfasst;
**dadurch gekennzeichnet, dass**
das zweite Echosignal ein erstes Störechosignal, dem Hindernis korrespondierend, umfasst, und das Ziel-Störechosignal erhalten wird auf der Grundlage des ersten Störechosignals und des ersten Echosignals;
das erste Störechosignal erzeugt wird, wenn das erste Radarsignal von dem Hindernis reflektiert wird;
eine Verzögerungszeit des ersten Störechosignals mehrmals angepasst wird, um eine Vielzahl von ersten angepassten Signalen zu erhalten, wobei ein Verhältnis einer Amplitude des ersten Echosignals zu einem ersten Abtastzeitpunkt zu einer Amplitude von jedem aus der Vielzahl von ersten angepassten Signalen zu dem ersten Abtastzeitpunkt als ein Amplitudenkoeffizient von jedem ersten angepassten Signal bestimmt wird, wobei jedes erste angepasste Signal und der Amplitudenkoeffizient von jedem ersten angepassten Signal multipliziert werden, um eine Vielzahl von zweiten angepassten Signalen zu erhalten, und wobei das Ziel-Störechosignal bestimmt wird auf der Grundlage der Vielzahl von zweiten angepassten Signalen und des ersten Echosignals; wobei
Verarbeitung zum Minimieren des mittleren quadratischen Fehlers an jedem aus der Vielzahl von zweiten angepassten Signalen und dem ersten Echosignal durchgeführt wird, um eine Vielzahl von Verarbeitungsresultaten zu erhalten, wobei ein kleinerer Wert des Verarbeitungsresultats angibt, dass ein zweites angepasstes Signal, dem Verarbeitungsresultat korrespondierend, dem Ziel-Störechosignal ähnlicher ist; und
ein zweites angepasstes Signal, einem kleinsten Wert in jenen aus der Vielzahl von Verarbeitungsresultaten korrespondierend, als das Ziel-Störechosignal bestimmt wird,
wobei das Ziel-Störechosignal aus dem ersten Echosignal unterdrückt wird, um das Echosignal des ersten Ziels zu erhalten,
und
wobei die Entfernungsmessungsverarbeitung durchgeführt wird auf der Grundlage des Echosignals des ersten Ziels.

2. Verfahren nach Anspruch 1, wobei das Hindernis eine Innenwand eines Gehäuses und/oder ein Fenster und/oder eine interne Schaltung einer Radarentfernungsmessvorrichtung (100) umfasst.

3. Radarentfernungsmessvorrichtung (100), beinhaltend eine Signalverarbeitungsvorrichtung (110), mindestens eine Signal-Sendeempfängergruppe (1) und eine reflektierende Vorrichtung (140), eingerichtet zum Ausführen des Verfahrens nach Anspruch 1 oder 2.

4. Computerprogrammprodukt, umfassend Anweisungen zum Bewirken, dass ein Computer, verbunden mit einem ersten Sender, ausgelegt zum Senden eines ersten Radarsignals, wobei das erste Radarsignal ein Laser-Radarsignal ist, einem ersten Empfänger, ausgelegt zum Empfangen eines ersten Echosignals des ersten Radarsignals, und einem zweiten Empfänger, ausgelegt zum Empfangen eines zweiten Echosignals des ersten Radarsignals, wobei sich der zweite Empfänger außerhalb eines primären Signalübertragungspfads zwischen dem ersten Sender und dem ersten Empfänger befindet, die Schritte des Verfahrens nach Ansprüchen 1 bis 2 ausführt.

5. Computerlesbares Speicherungsmedium, das darauf das Computerprogrammprodukt nach Anspruch 4 gespeichert hat.

## Revendications

1. Procédé de télémétrie radar, le procédé comprenant les étapes consistant à :
envoyer (S310) un premier signal radar par l'intermédiaire d'un premier émetteur, le premier signal radar étant un signal radar laser ;
recevoir (S320) un premier signal d'écho du premier signal radar par l'intermédiaire d'un premier récepteur, le premier signal d'écho comprenant un signal d'écho d'une première cible ;
recevoir (S330) un deuxième signal d'écho du premier signal radar par l'intermédiaire d'un deuxième récepteur, le deuxième récepteur étant situé en dehors d'un trajet de transmission du signal primaire entre le premier émetteur et le premier récepteur ; et
effectuer (S340) un traitement de télémétrie sur la première cible sur la base du premier signal d'écho et du deuxième signal d'écho, dans lequel
le deuxième signal d'écho est utilisé pour déterminer un signal d'écho parasite cible correspondant à un obstacle, et le signal d'écho de la première cible ne comprend pas le signal d'écho parasite cible ;
**caractérisé en ce que**
le deuxième signal d'écho comprend un premier signal d'écho parasite correspondant à l'obstacle, et le signal d'écho parasite cible est obtenu sur la base du premier signal d'écho parasite et du premier signal d'écho ;
le premier signal d'écho parasite est généré lorsque le premier signal radar est réfléchi par l'obstacle ;
un temps de retard du premier signal d'écho parasite est ajusté à plusieurs reprises afin d'obtenir une pluralité de premiers signaux ajustés, un rapport entre l'amplitude du premier signal d'écho à un premier instant d'échantillonnage et l'amplitude de chacun de la pluralité de premiers signaux ajustés à ce premier instant d'échantillonnage est déterminé comme coefficient d'amplitude de chaque premier signal ajusté, chaque premier signal ajusté et le coefficient d'amplitude de chaque premier signal ajusté sont multipliés afin d'obtenir une pluralité de deuxièmes signaux ajustés, et le signal d'écho parasite cible est déterminé sur la base de la pluralité de deuxièmes signaux ajustés et du premier signal d'écho, dans lequel
un traitement d'erreur quadratique moyenne minimale est effectué sur chacun des signaux de la pluralité de deuxièmes signaux ajustés et sur le premier signal d'écho, afin d'obtenir une pluralité de résultats de traitement, où une valeur plus faible du résultat de traitement indique qu'un deuxième signal ajusté correspondant au résultat du traitement est plus similaire au signal d'écho parasite cible ; et un deuxième signal ajusté correspondant à la plus petite valeur parmi celles de la pluralité de résultats de traitement est déterminé comme étant le signal d'écho parasite cible,
le signal d'écho parasite cible est supprimé du premier signal d'écho afin d'obtenir le signal d'écho de la première cible, et
le traitement de télémétrie est effectué sur la base du signal d'écho de la première cible.

2. Procédé selon la revendication 1, dans lequel l'obstacle comprend au moins l'un parmi une paroi interne d'un boîtier, une fenêtre ou un circuit interne d'un appareil de télémétrie radar (100).

3. Appareil de télémétrie radar (100) comprenant un appareil de traitement de signaux (110), au moins un groupe d'émetteurs-récepteurs de signaux (1) et un appareil réfléchissant (140) adapté pour exécuter le procédé selon la revendication 1 ou la revendication 2.

4. Produit programme informatique comprenant des instructions destinées à amener un ordinateur connecté à un premier émetteur configuré pour envoyer un premier signal radar, le premier signal radar étant un signal radar laser, à un premier récepteur configuré pour recevoir un premier signal d'écho du premier signal radar, et à un deuxième récepteur configuré pour recevoir un deuxième signal d'écho du premier signal radar, le deuxième récepteur étant situé à l'extérieur d'un trajet de transmission de signal primaire entre le premier émetteur et le premier récepteur, à exécuter les étapes du procédé selon la revendication 1 ou la revendication 2.

5. Support de stockage lisible par ordinateur sur lequel est stocké le produit programme informatique selon la revendication 4.
